# EUROPEAN PATENT APPLICATION

(11) **EP 1 613 102 A1**
(43) Date of publication of application: **04.01.2006**
(21) Application number: 04405401.3
(22) Date of filing: 29.06.2004
(51) Int. Cl.: H04Q 7/22

(54) **Method and telecommunication system allowing controlled delivery of short messages**

(71) Applicant: BMD Wireless AG, 6300 Zug (CH)
(72) Inventor: Woog, Marc A., 8185 Winkel (CH)
(74) Representative: Rutz & Partner

(57) **Abstract**

The method and telecommunication system allow controlled delivery of Short Messages (SM) in a mobile telecommunication network (PLMN) that supports the transfer of Short Messages (SM) according to an implemented Short Message Service (SMS). According to the present invention, instructions received from a subscriber for handling Short Messages (SM) are stored in a database (I-BASE) of a network entity (P-SC, P-MSC). Subsequently for a Short Message (SM) containing sending and receiving party identification information, a lookup is performed in said database (I-BASE) using at least one of the sending or receiving party identification information of the sent or received Short Message (SM) in order to determine whether the sending or the receiving party has provided instructions for further handling of the Short Message (SM), which, if available, are executed preferably by the network entity (P-SC, P-MSC) that comprises the database(I-BASE). Hence, the present invention allows a subscriber to flexibly control the handling, flow and content of Short Messages (SM) that he sends or that are directed to his Mobile Station (MS). The subscriber can redirect, copy or distribute Short Messages (SM) or automatically reply to Short Messages (SM) in accordance with the instructions he has stored in the database (I-BASE).

## Description

The present invention relates to a method and a telecommunication system that allow controlled delivery of Short Messages SM in a mobile telecommunication network, e.g. as specified in the GSM (Global System for Mobile Communications) standards, the TDMA standards, the CDMA standards, the 3G standards (MMS) as well as in the Signalling System No. 7, IS-41 and IS-95 protocol standards.

More particularly the present invention relates to a method for controlling the delivery of Short Messages SM in a mobile telecommunications network according to the individual requirements of the subscribers.

### BACKGROUND OF THE INVENTION

Modern mobile telecommunications networks such as the Pan-European Cellular System, known as the Global System for Mobile Communications GSM, allow the transfer of Short Messages SM between subscribers.

An introduction to the GSM system can be found in [1], Lajos Hanzo, THE COMMUNICATIONS HANDBOOK, CRC PRESS, Boca Raton 1997, Chapter 87, pages 1226-1228.

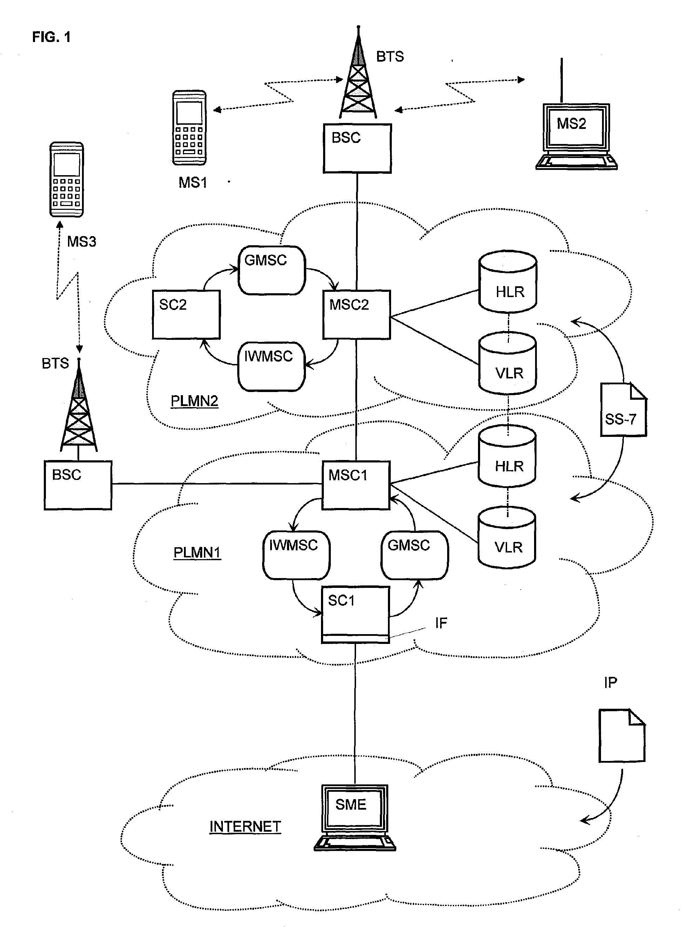

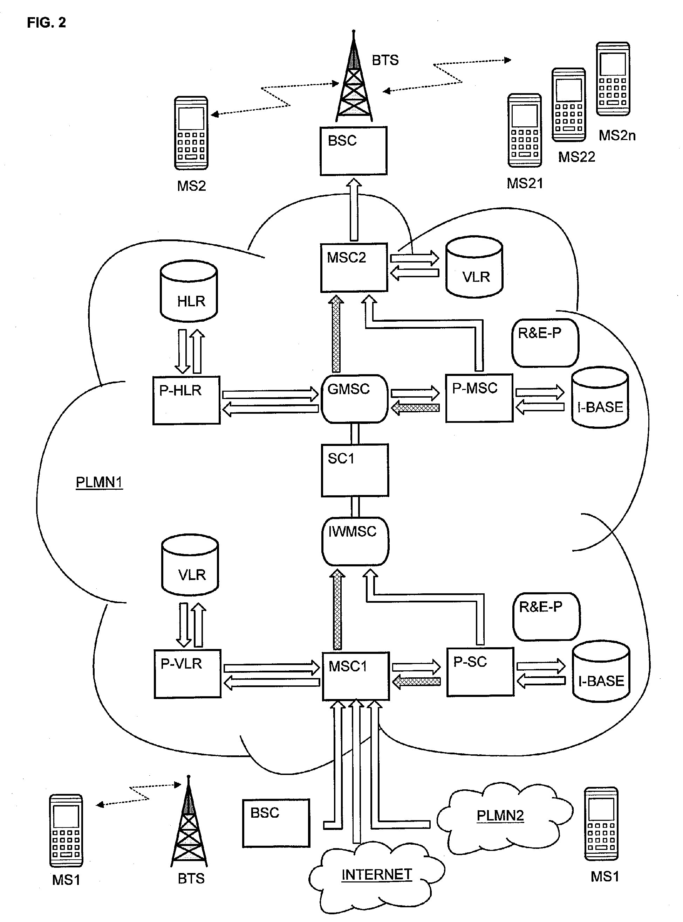

The configuration of a mobile telecommunication network that operates according to the GSM standards is disclosed in [2], GSM Technical Specification 09.02 (Mobile Application Part (MAP) specification), ETSI European Telecommunication Standard ETS 300 599, chapter 2, pages 29-33 (see figure 2.2/1).

Short Message Management Services are described in [2], chapter 10, pages 165-176. Short Message Service Procedures are described in [2], chapter 20, pages 591-645.

The technical realisation of the Short Message Service is further described in [3], GSM Specification 03.40 concerning the technical realisation of the Short Message Service (SMS), ETSI European Telecommunication Standard ETS 300 536 (October 1994), entire document.

As described in [3], chapter 10.2 (Short Message mobile originated), page 68, means are provided for a Mobile Services Switching Center MSC to verify that the transfer of a received mobile originated Short Message SM does not violate supplementary services invoked or restrictions imposed for the calling party. For that purpose a "sendInfoForMO"-SMS-message is sent to the Visitor Location Register VLR. A successful response from the Visitor Location Register VLR carries the Mobile Station International ISDN Number (MSISDN) of the originating Mobile Station MS, which will be transferred to the (Short Message) Service Center (SM-)SC. Short Message Service SMS does normally not guarantee the delivery of a Short Message SM, since a network operator may deem a message undeliverable after a given validity period. However if the receiving Mobile Station MS can be reached within the given time limit the Short Message SM is delivered unconditionally according to the standards referenced above.

From [4], US 2003/0083078 A1 it is known that Short Messages SM can be routed to a message discrimination module, which comprises a table with SMS message discrimination data, that may be used for spam message discrimination in the mobile telecommunications network. SMS message discrimination data may partially be provided by the subscribers in order to individually suppress specific Short Messages SM, e.g. Short Messages SM with a specific originating address (OA). Hence, the method disclosed in [4] allows controlling the non-delivery of unwanted spam messages. As a result, the subscriber's influence on message flow remains marginal.

The method described in [4] uses either direct addressing in order to forward a Short Message SM to a signalling node that comprises a message discrimination module or indirect addressing, e.g. by means of global title translation, in order to route a Short Message SM via a signalling point to a stand-alone message processing platform.

Both methods, using either direct or indirect addressing, result in inflexible network structures, that for example do prevent optimal load balancing, which may be required in view of a steadily increasing message flow.

The present invention is therefore based on the object of specifying a method and a telecommunication system that allow controlled delivery of Short Messages SM in a mobile telecommunications network PLMN.

In particular it is an object of the present invention to provide control on the message flow to a subscriber.

It is another object of the present invention to provide flexible and easily manageable control mechanisms, that facilitate implementation of the method in the mobile telecommunication network and that allow load balancing with minimal efforts.

It is a further object of the present invention to provide a method that enables a subscriber to transfer increased information content in Short Messages SM.

### SUMMARY OF THE INVENTION

The above and other objects of the present invention are achieved by a method and a telecommunication system according to claim 1 and claim 13.

The method and telecommunication system allow controlled delivery of Short Messages SM in a mobile telecommunication network PLMN that supports the transfer of Short Messages SM according to an implemented Short Message Service SMS.

According to the present invention, instructions received from a subscriber for handling Short Messages SM are stored in a database of a network entity. Subsequently for a Short Message SM containing sending and receiving party identification information, a lookup is performed in said database using at least one of the sending or receiving party identification information of the sent or received Short Message SM in order to determine whether the sending or the receiving party has provided instructions for further handling of the Short Message SM, which, if available, are executed preferably by the network entity that comprises the database.

Hence, the present invention allows a subscriber to flexibly control the handling and flow of Short Messages SM that he sends or that are directed to his Mobile Station MS. The subscriber can redirect, copy or distribute Short Messages SM or automatically reply to Short Messages SM in accordance with the instructions he has stored in the database.

For example, according to the subscriber's instructions, the Short Message SM can be redirected, copied or distributed to further subscribers depending on the sending or receiving party identification information contained in the examined Short Message SM. E.g., a subscriber can decide that all Short Messages SM, that he sends or receives, are copied to another subscriber, e.g. to the Mobile Station MS of his secretary. A subscriber who is the leader of a team can distribute incoming or outgoing Short Messages SM to all team members. Incoming Short Messages SM from third parties, that are addressed to but temporarily not or never handled by the subscriber, can be redirected to a deputy. With this measure the subscriber can ensure that incoming Short Messages SM addressed to his Mobile Station MS are temporarily taken care of by another person, without being disturbed.

In a preferred embodiment, if a Short Message SM is distributed to further subscribers, e.g. to the above mentioned team members, then the recipients can automatically be declared in the Short Message SM preferably be means of symbols or short codes that are identically used on the sides of the sending and receiving party.

In a preferred embodiment, a Short Message SM directed to a specific destination address (DA) can automatically be answered or distributed. This service can advantageously also be provided, if the subscriber does not use a physical but a virtual Short Message Entity MS/SME. The virtual Mobile Station MS with an assigned destination address (MSISDN) is registered by the network operator preferably as all other Mobile Stations MS. The organisation or individual, that uses the virtual Mobile Station MS can store instructions and messages in the database. These messages can be retrieved by sending a Short Message SM to the virtual Mobile Station MS which will automatically reply with the stored message. Hence, an organisation such as a sport club may use this service for providing information to its members or supporters. Distribution or replying is preferably done, if further criteria are fulfilled. E.g., if a message carries a specific originating address or comprises a codeword.

In another preferred embodiment, information entered into sending party's Mobile Station MS is at least partially converted into symbols or short codes. E.g., frequently used words or whole sentences are converted into a single symbol. Hence, the density of the information contained in a Short Message SM can significantly be increased or even be multiplied.

The conversion may automatically be performed by a converter module contained in the subscriber's Mobile Station MS. Further, a list may be provided from which the subscriber can select words for which a symbol or short code is available. In the receiving party's Mobile Station MS, symbols or short codes contained in a Short Message SM are automatically converted back to the information represented by said symbols or short codes.

The rules for the conversion process that are provided by the network operator or the administration of a private organisation may be downloaded over the Internet or over the control channels of the telecommunication network PLMN before Short Messages SM are sent. In the subscriber's Mobile Station the conversion is automatically performed, if a Short Message SM is addressed to or received from a member of the subscriber group or a subscriber of the network for which the conversion rules were provided.

If the conversion rules are provided by the network operator then the whole process of converting and reconverting information can be performed without any involvement of the subscriber. If a Short Message SM is received from another network, then the receiving Mobile Station MS could identify said network by means of the Network Specific Number contained in the address field of the Short Message (see [3], page 33). If foreign network use their own conversion rules, then this conversion rules can be downloaded to the Mobile Station MS and selected according to the Network Specific Number.

In a preferred embodiment, an extended lookup in the database is performed to determine whether the Short Message is an unwanted message, that can be discarded.

Data relating to the sending or receiving party's entitlement for storing and executing the above described instructions is preferably stored in the subscriber's Home Location Register HLR. If the Home Location Register HLR or a Visitor Location Register VLR does not contain an entry, indicating that the subscriber is entitled to supplementary services relating to redirecting, copying and distributing Short Messages SM then the Short Message is handled in a conventional manner.

The supplementary services relating to redirecting, copying and distributing Short Messages SM are preferably separated from the supplementary services relating to detecting and discarding Short Messages SM of a malicious character that may disturb the operation of the mobile telecommunications network and the attached Mobile Stations. Hence, the suppression of unwanted messages, at least malicious messages, may be mandatory in a network, while the supplementary services relating to redirecting, copying and distributing Short Messages SM may be provided optionally for interested subscribers.

As described above, Short Messages SM may also be statically directed by direct or indirect addressing to the network entity comprising the database that contains instructions for handling Short Messages SM or information, which allows detection of unwanted Short Messages SM. However, this procedure results in inflexibility of the network management that may cause problems in controlling network traffic, load balancing and redesigning or expanding the network architecture.

In order to avoid these problems, the present invention proposes intercepting "information request"-messages, that are based on mobile originated or mobile terminated Short Messages SM and that are sent by a first network entity, e.g. the Mobile Services Switching Center MSC or the Service Center SC, to the related Home Location Register HLR or to the related Visitor Location Register VLR. Said "information request"-messages are intercepted by means of a second network entity which subsequently interrogates said Home Location Register HLR or said Visitor Location Register VLR and returns retrieved routing information, in which the address of the routing destination has been replaced by the address of a third network entity that comprises the database with the instructions for handling Short Messages SM. Hence, "information request"-messages can be intercepted before or after the Short Message SM has been forwarded to the Service Center SC. Based on the modified routing information the first network entity can send the related Short Message SM to the third network entity, which then retrieves and executes the instructions that are provided for that Short Message SM.

### BRIEF DESCRIPTION OF THE DRAWINGS

Some of the objects and advantages of the present invention have been stated, others will appear when the following description is considered together with the accompanying drawings, in which:
- Fig. 1: shows a known telecommunications network with a first (public land) mobile network PLMN1 that is connected to the Internet and to a second mobile network PLMN2;
- Fig. 2: shows an inventive telecommunications network with the first mobile network PLMN1 in a preferred embodiment;
- Fig. 3: shows transactions performed in the first mobile network PLMN1 that involve redirecting, copying, distributing or discarding of a mobile originated Short Message SM according to instructions provided by a subscriber and/or the network operator;
- Fig. 4: shows transactions performed in the first mobile network PLMN1 that involve redirecting, copying, distributing or discarding of a mobile terminated Short Message SM according to instructions provided by a subscriber and/or the network operator;
- Fig. 5: shows an instruction list contained in a database I-BASE and transactions performed in the inventive telecommunications network according to instructions retrieved from the database I-BASE, that match certain criteria of an examined Short Message SM; and
- Fig. 6: a Short Message SM that is preferably handled as shown in figure 5 and that is converted on the sending and on the receiving side based on a global or a private conversion list CL-G, CL-P.

### DETAILED DESCRIPTION OF THE PREFERRED EMBODIMENTS

Figure 1 shows a known telecommunications network with a first (public land) mobile network PLMN1 that is connected to the Internet and to a second mobile network PLMN2. The elements and operation of this network are described in [5], U.S. Patent Application Publication 2004/0053629 A1.

The protocol architecture of the Short Message System SMS implemented in the mobile network PLMN1 is shown in [3], chapter 9, page 30. Transfer of Short Messages SM between Short Message Entities SME such as Mobile Stations MS or fixed stations, requires a Service Center SC which is capable of
a) receiving a Short Message SM from a Mobile Station MS or over an interface from a data terminal SME within a TCP/IP network,
b) submitting a Short Message SM to a Mobile Station MS or over an interface from a data terminal SME within a TCP/IP network and
c) receiving and returning reports relating to sent or received Short Messages SM.

Procedures allowing the transfer of a Short Message SM from a Mobile Station MS to a Service Center SC are shown in [3], pages 64 and 65. Before a Short Message SM is transferred the Mobile Services Switching Center MSC retrieves information from the Visitor Location Register VLR in order to verify that the requested service is available to the subscriber. Afterwards the Short Message SM is transferred via the Mobile Services Switching Center MSC to an interworking function IWMSC. The interworking function IWMSC is capable of receiving a Short Message SM from within the public land mobile network PLMN and submitting it to a Service Center SC, which will forward the Short Message SM to the addressed Mobile Station MS. The originating Mobile Station MS will always address the Service Center SC by an E.164 address (see [3], page 24, paragraph 5.2.2).

Procedures allowing the transfer of a Short Message SM from a Service Center SC to a Mobile Station MS are shown in [3], pages 56 and 57 (see also [3], Annex 2). The Short Message SM is forwarded by the Service Center SC to a gateway function GMSC, which interrogates the Home Location Register HLR for routing information to the visited Visitor Location Register VLR. The Visitor Location Register VLR is the functional unit that attends to a Mobile Station MS operating outside the area of the Home Location Register HLR. A visiting Mobile Station MS is automatically registered at the nearest Mobile Services Switching Center MSC and the Visitor Location Register VLR is informed accordingly. Based on the retrieved routing information the gateway GMSC forwards the Short Message SM to the visited Mobile Services Switching Center MSC. Then, the visited Mobile Services Switching Center MSC retrieves corresponding subscriber information from the Visitor Location Register VLR based on which the Short Message SM is forwarded to the Mobile Station MS. Operations are terminated by returning a delivery report to the Service Center SC of the network where the Short Message SM has been initiated.

As described above, it is known from [4] to statically route Short Messages SM to a signalling node that comprises a message discrimination module. However implementing static restrictions on a standardised network is normally not desirable since it results in inflexibility of the network.

Figure 2 shows an inventive telecommunications network with the first mobile network PLMN1 in a preferred embodiment that allows dynamic routing of Short Messages SM without imposing static restrictions on the mobile network PLMN1. Symbolically shown is the transfer of a Short Message SM from a first Mobile Station MS1 to a second Mobile Station MS2 with an intermediate access to a database I-BASE that takes place before or after the Short Message SM has reached the Service Center SC.

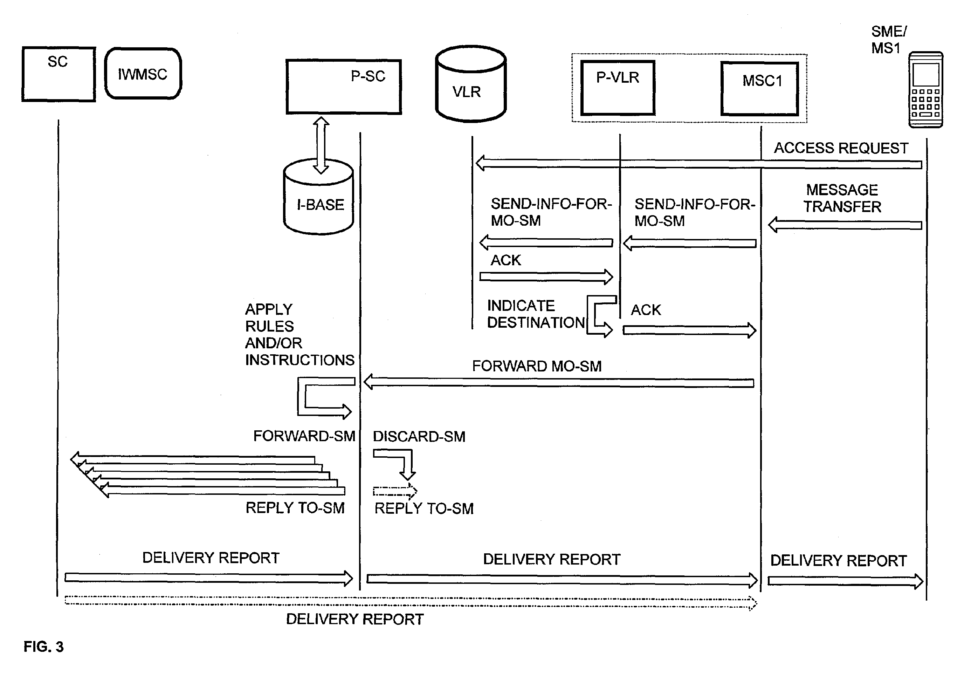

Transactions, that are performed for accessing the database I-BASE, before the Short Message SM has reached the Service Center SC, are shown in figure 3.

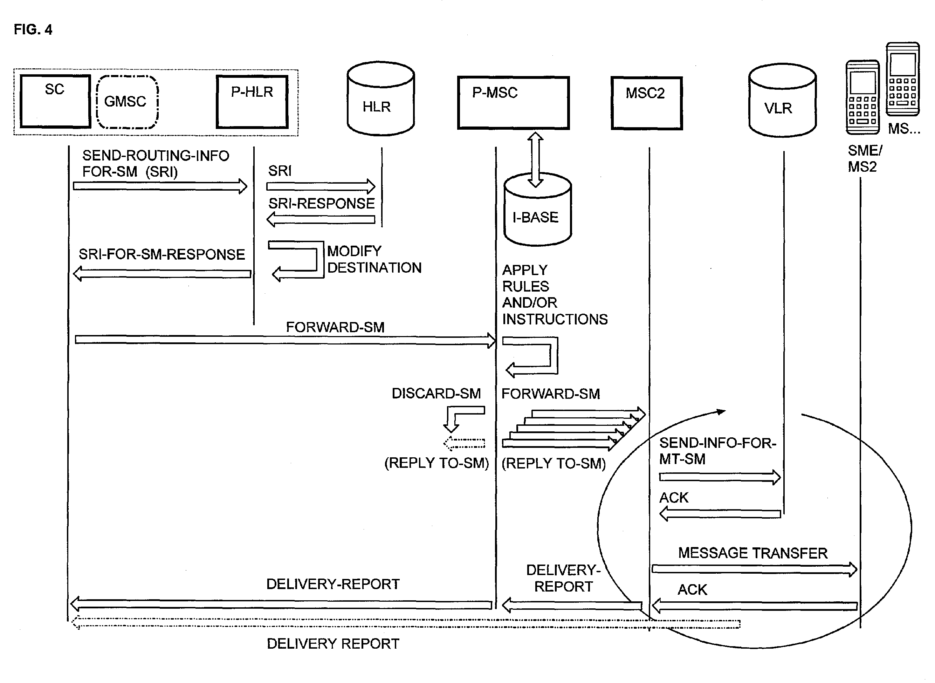

Transactions, that are performed for accessing the database I-BASE, after the Short Message SM has reached the Service Center SC, are shown in figure 4.

As described above, for a Short Message SM received from the Mobile Station MS1, the related Mobile Services Switching Center MSC1 sends an "information request"-message (SENF-INFO-FOR-MO-SM) to the Visitor Location Register VLR in order to verify that the requested service is available to the subscriber. As shown in figure 2 and figure 3, these "information request"-messages are intercepted by means of a VLR-proxy P-VLR, which subsequently creates and forwards its own "information request"-message to the Visitor Location Register VLR. If the Visitor Location Register VLR contains an entry indicating that the sending party or the receiving party is entitled to accessing the database I-BASE, that contains instructions for handling Short Messages SM, then the Short Message SM is submitted to an SC-proxy P-SC, that applies instructions retrieved from the database I-BASE as described below. Subsequently, if not discarded, the Short Message SM or copied Short Messages SM are sent to the interworking function IWMSC or to the Service Center SC. It is further possible that for all "information request"-messages the related Short Messages SM are routed to the SC-proxy P-SC for applying stored instructions or filtering unwanted messages.

Accessing the database I-BASE before the Short Message SM is forwarded to the Service Center SC yields several advantages. E.g., due to discarding unwanted Short Message SM the traffic through the Service Center SC can be reduced. Further, if the Short Message SM is distributed or copied, then the resulting Short Messages SM are generated in close range to the Service Center SC, which results in a minimal traffic burden on the network. However, if the indication of the related services is required from the Visitor Location Register VLR then this information must be transferred from the Home Location Register HLR to the concerned Visitor Location Register VLR. It may therefore be preferably to perform the transaction for accessing the database I-BASE after the Short Message SM has reached the Service Center SC (see figure 2 and figure 4).

As described above, for a Short Message SM received from the Mobile Services Switching Center MSC1, the Service Center SC or the gateway function GMSC sends a "routing information request"-message (SEND-ROUTING INFO-FOR-SM) to the Home Location Register HLR in order to obtain the address of the Mobile Services Switching Center MSC2 that has been visited by the addressed Mobile Station MS2.

As shown in figure 2 and figure 4, these "routing information request"-messages sent by the Service Center SC or the gateway function GMSC are intercepted by means of an HLR-proxy P-HLR which subsequently creates and forwards its own "routing information request"-message for the concerned Short Message SM to the Home Location Register HLR. If the Home Location Register HLR contains an entry indicating that the sending party or the receiving party is entitled to accessing the database I-BASE, then the Short Message SM is submitted to an MSC-proxy P-MSC, that applies instructions retrieved from the database I-BASE as described below. Subsequently, if not discarded, the Short Message SM or copied Short Messages SM are sent to the visited Mobile Services Switching Center MSC2. It is further possible that for all "information request"-messages the related Short Messages SM are routed to the Mobile Services Switching Center MSC2 for applying stored instructions or filtering unwanted messages.

Routing the Short Messages SM to the SC-Proxy P-SC and/or to the MSC-Proxy P-MSC is preferably done by replacing the given destination address by the address of the SC-Proxy P-SC and/or to MSC-Proxy P-MSC. In the reply provided by the Home Location Register HLR to a received "routing information request"-message the HLR-Proxy P-HLR preferably replaces the address of the Mobile Services Switching Center MSC2 visited by the addressed Mobile Station MS2 by the address of the MSC-Proxy P-MSC. In order to avoid an additional access to the Home Location Register HLR the address of the Mobile Services Switching Center MSC2 may be stored in a cache that can be accessed after the instructions are performed.

The realisation and functionalities of the VLR Proxy P-VLR, the SC-Proxy P-SC, the HLR-Proxy P-HLR and the MSC-Proxy P-MSC may be adapted to the architecture implemented in the mobile network PLMN1. The VLR Proxy P-VLR and the SC-Proxy P-SC can be integrated in Mobile Services Switching Centers MSC. The HLR-Proxy P-HLR and the MSC-Proxy may be integrated in the Service Center SC or the gateway function GMSC.

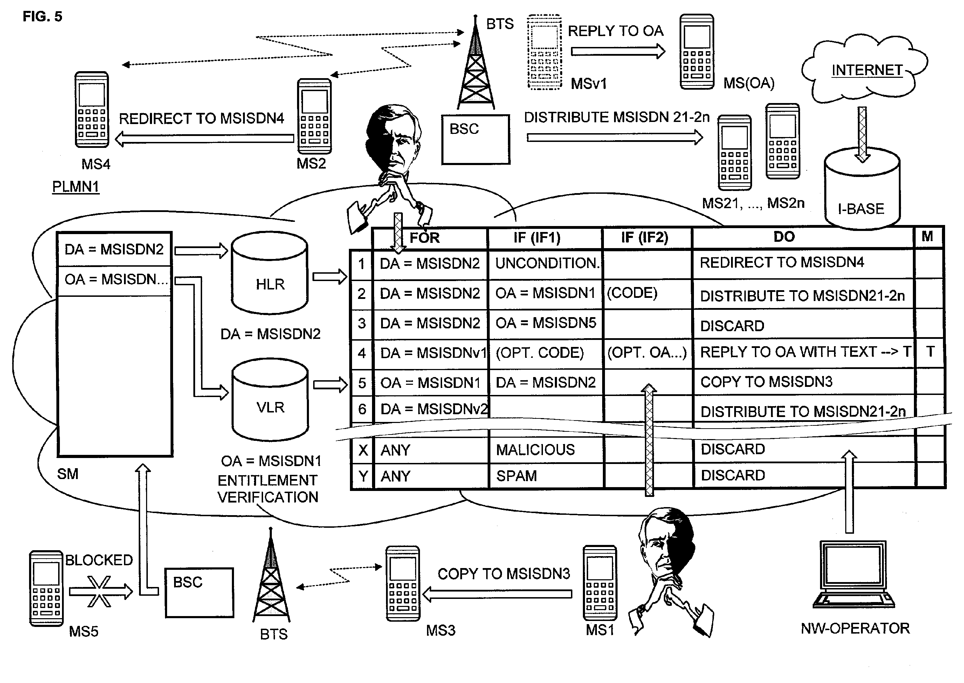

The instructions for handling messages can be stored in the database I-BASE by a subscriber who is entitled to use the related services. Entitlement for these services can be registered in the Home Location Register HLR and interrogated, whenever the subscriber requests access to the database I-BASE for adding or changing instruction or whenever a Short Message SM is addressed to or originating from Mobile Station MS of the subscriber. In a preferred embodiment the entitled subscribers may access the database I-BASE via the Internet by means of an application that facilitates data management. Subsequently for a Short Message SM containing sending and receiving party identification information of the entitled subscriber a lookup is performed in the database I-BASE in order to determine whether the subscriber has provided instructions for further handling of the Short Message SM which then are executed preferably by the network entity P-SC, P-MSC that comprises the database I-BASE. According to the instructions provided by the subscriber the incoming messages can be redirected, copied, distributed or replied to as shown in figure 5.

Figure 5 shows the execution of instructions that are provided in the instruction table contained in the database I-BASE. In the given example the database I-BASE is accessed after the entitlement of the subscriber for the related services has been verified by a lookup in the Home Location Register HLR or in the Visitor Location Register VLR. After verification that the services are available for the given destination or originating address, the database I-BASE is accessed.

Line 1 of the instruction table contains the instruction of the holder of Mobile Station MS2 that all Short Messages SM that are directed to its Mobile Station International ISDN Number MSISDN2 shall be redirected to the Mobile Station MS4 with MSISDN4.

Line 2 of the instruction table contains the instruction of the holder of Mobile Station MS2 that all Short Messages SM that are directed to its Mobile Station International ISDN Number MSISDN2 shall be distributed to the Mobile Stations MS21, ..., MS2n. Optionally the Short Messages SM can be redirected only if a certain codeword is contained in the Short Message SM. For example if the Short Message SM contains the name of a project, then the Short Message SM is copied or distributed to the project group.

Line 3 of the instruction table contains the instruction of the holder of Mobile Station MS2 that all Short Messages SM that are directed to its Mobile Station International ISDN Number MSISDN2 and that are originated by Mobile Station MS5 with MSISDN5 shall be discarded.

Line 4 of the instruction table contains the instruction of the holder of the real or virtual Mobile Station MSv1 that all Short Messages SM that are directed to its Mobile Station International ISDN Number MSISDNv1 shall be replied with a Short Message SM that is directed to the originating address taken from the received Short Message SM. This instruction can be linked to further conditions such as a codeword or a restriction to a group of originating addresses. For the reply to Short Messages SM preferably a virtual Mobile Station is used that is capable of automatically answering a high number of Short Messages SM within a short time period. Line 4 contains in a separate field the text T that will be entered into the reply messages.

Line 5 of the instruction table contains the instruction of the holder of Mobile Station MS1 that all Short Messages SM that are sent from his Mobile Station MS1 and that are directed to the Mobile Station International ISDN Number MSISDN2 shall be copied to the Mobile Station MS3 with MSISDN3.

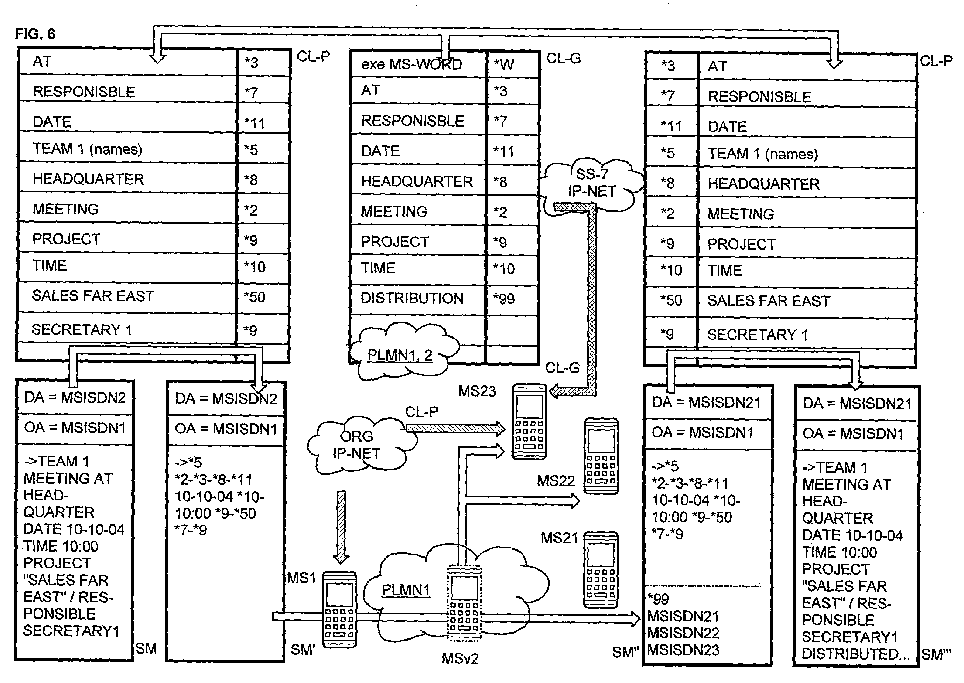

Line 6 of the instruction table contains the instruction of an organisation, that all Short Messages SM that are sent to the number MS-ISDNv2 of a virtual Mobile Station MSv2 (see figure 6) are distributed to the Mobile Stations MS21, ..., MS2n of the team members.

The virtual Mobile Stations MSv1 and MSv2 are controlled by the administration department of the organisation which provides for virtual Mobile Station MSv1 the text for the reply messages and the addresses (all or a limited number of originating addresses), to which the reply messages are sent and for virtual Mobile Station MSv2 the addresses of the Mobile Stations MS21, ..., MS2n, to which a Short Message SM shall be distributed. As shown in figure 5, the database I-BASE is accessible through the Internet. The subscribers may therefore use a PC-terminal with an application that allows entering, deleting or modifying instructions and reply messages after the entitlement for these activities has been verified by the management system of the network.

Lines X and Y of the instruction table contain instruction entered by the network operator saying that Short Messages SM shall be discarded, independently of the originating or destination address, if they contain malicious code or spam.

The network operator may decide that the part of the database I-BASE that contains his instructions is accessed for all Short Messages SM. In this case, entitlement is required accessing the instructions entered by the subscribers, that are not limited to the transactions described above.

Hence, the present invention allows a subscriber to flexibly control the handling, flow and content of Short Messages SM that he sends or that are directed to his Mobile Station MS.

Short Messages SM, for which transactions were performed, can be marked accordingly.

In a further embodiment of the invention information to be transferred to a recipient may, at least partially, be converted into symbols or short codes before the Short Message SM is despatched. E.g., frequently used words or whole sentences may be converted to a single symbol or code, if available. Hence, the density of the information contained in a Short Message SM can significantly be increased or even be multiplied.

The conversion may automatically be performed by a converter module contained in the subscriber's Mobile Station MS1. Further, a list may be provided from which the subscriber can select words for which a symbol or short code is available. In the receiving party's terminal or Mobile Station MS2 symbols or short codes contained in a Short Message SM are automatically converted to the information represented by said symbols or short codes.

The rules for the conversion process are agreed upon and exchanged within a subscriber group with at least two subscribers before encoded Short Messages SM are sent. Conversion rules may also be provided by the network operator to all subscribers. In the subscriber's Mobile Station MS the conversion is automatically performed if a Short Message SM is addressed to or received from a member of the subscriber group or a subscriber of the network for which the conversion rules were provided.

If the conversion rules are provided by the network operator then the whole process of converting and reconverting information can be performed without any involvement of the subscriber. If a Short Message SM is received from another network, then the receiving Mobile Station MS could identify said network by means of the Network Specific Number contained in the address field of the Short Message SM (see [3], page 33). If foreign networks use their own conversion rules, then this conversion rules can be downloaded to the Mobile Station MS and selected according to the Network Specific Number.

Figure 6 shows the distribution of a Short Message SM sent from Mobile Station MS1 according to line 6 of the instruction table shown in figure 5 and that is converted on the sending and on the receiving side based on a private conversion list CL-P or a global conversion list CL-G of the present or a foreign network PLMN1, PLMN2. The described conversion processes may however also be applied for Short Messages SM for which the additional services (redirecting, ...) described above are not available.

Figure 6 shows the conversion of an invitation to a meeting based on short codes contained in the private conversion list CL-P that is stored in the Mobile Station MS1 on the sending side and in the Mobile Stations MS21, ..., MS2n on the receiving side and that has been downloaded from a data server of an organisation, to which the holders of said Mobile Stations MS1, MS21, ..., MS2n belong. As an alternative the network operator may provide a global conversion list CL-G that is available to all subscribers. Further it is possible to use a combination of a private and a global conversion list. The network operator may create and easily enhance his global conversion list CL-G by analysing the message traffic of his network.

The words of the Short Message SM at the sending party side are preferably converted sequentially after they have been entered, so that the data compression is continuously performed and a maximum of free space for additional information is provided for the user of the Mobile Station MS.

After the information has been entered and converted the resulting Short Message SM is despatched to the virtual Mobile Station MSv2 with destination address MSISDNv2. According to line 6 of the instruction table, the Short Message SM' is distributed to the Mobile Stations MS21, MS22 and MS23 of the members of the concerned team. In the delivered Short Message SM" a distribution list with the names or addresses of the team members has been added. The received Short Message SM" is then converted in each of the Mobile Stations MS21, MS22 and MS23 by means of the conversion list CL-P that has been used by the sending party.

The Short Message SM may also be formatted, comprising the code of the conversion list in a field or the code of a program that shall be executed upon receipt of the Short Message SM (see line 1 of the global conversion list CL-G in figure 6).

Figure 6 further shows the download of the private and global conversion lists CL-P, CL-G from an IP-network IP-NET that is used by the organisation ORG or from an IP-network IP-NET or over the control channels of the mobile telecommunication network PLMN1.

### REFERENCES

[1] THE COMMUNICATIONS HANDBOOK, CRC PRESS, Boca Raton 1997
[2] GSM Technical Specification 09.02 (Mobile Application Part (MAP) specification)
   ETSI European Telecommunication Standard ETS 300 599 (February 1995)
[3] GSM Specification 03.40 concerning the technical realisation of the Short Message Service (SMS),
   ETSI European Telecommunication Standard ETS 300 536 (October 1994)
[4] U.S. Patent Application Publication 2003/0083078 A1
[5] U.S. Patent Application Publication 2004/0053629 A1

## Claims

1. A method for controlled delivery of Short Messages (SM) in a mobile telecommunication network (PLMN1; PLMN2) that supports the transfer of Short Messages (SM) according to a Short Message Service (SMS) implemented in said mobile telecommunication network (PLMN1; PLMN2), comprising the steps of
a) storing message handling instructions received from a subscriber in a database (I-BASE);
b) sending or receiving a Short Message (SM) including sending and receiving party identification information;
c) performing a lookup in the database (I-BASE) using at least one of the sending or receiving party identification information of the sent or received Short Message (SM) in order to determine whether the sending or the receiving party has provided instructions for further handling of the Short Message (SM); and
d) executing the instructions defined in said database (I-BASE).

2. A method according to claim 1, comprising the steps of redirecting, copying, distributing and/or automatically replying to the received Short Message (SM) as defined by the instructions stored in the database (I-BASE) depending on the sending or receiving party identification information contained in the Short Message (SM).

3. A method according to claim 2, comprising the steps of registering a virtual Mobile Station (MSv1, MSv2) in the mobile telecommunication network (PLMN1) and providing instructions in the database (I-BASE) in particular for distributing Short Messages (SM) that are addressed to the virtual Mobile Station (MSv2) or for replying to Short Messages (SM) that are addressed to the virtual Mobile Station (MSv1).

4. A method according to claim 2 or 3, comprising the steps of declaring the recipients of a distributed Short Message (SM) preferably be means of symbols or short codes that are identically used by the sending and receiving parties.

5. A method in particular according to one of the claims 1-4, comprising the steps of automatically converting information entered into the sending party's Mobile Station (MS1) or Short Message Entity (SME) at least partially into symbols or short codes contained in a conversion list (CL-P, CL-G) and/or automatically converting symbols or short codes contained in the Short Message (SM) in the receiving party's Mobile Station (MS2: MS21, ..., MS2n) or Short Message Entity (SME) to the information represented by said symbols or short codes.

6. A method according to claim 5, comprising the steps of downloading a private conversion list (CL-P) to Mobile Stations (MS) or Short Message Entities (SME) of a subscriber group or downloading the global conversion list (CL-G) provided by the network operator and automatically performing the conversion if a Short Message (SM) is addressed to or received from a member of the subscriber group or a subscriber of the network who use the private or global conversion list (CL-P; CL-G).

7. A method according to one of the claims 1-6, comprising the step of performing an extended lookup in the database, preferably using at least one of the sending and receiving party identification information, in order to determine whether the Short Message (SM) is an unwanted message and discarding unwanted messages.

8. A method according to one of the claims 1 to 7, comprising the steps of storing data relating to the sending or receiving party's entitlement for the execution of said instructions in the subscriber's Home Location Register (HLR) and retrieving said data from the Home Location Register (HLR) or a Visitor Location Register (VLR) before the look-up in the database is performed.

9. A method according to one of the claims 1 to 8, comprising the steps of storing data relating to the sending or receiving party's entitlement for the execution of said instructions in the subscriber's Home Location Register (HLR) and retrieving said data from the Home Location Register (HLR), or, if the information has been transferred to the Visitor Location Register (VLR), from the Visitor Location Register (VLR) before the look-up in the database is performed.

10. A method according to one of the claims 1 to 9, comprising the steps of intercepting "information request"-messages, that are based on mobile originated or mobile terminated Short Messages (SM) and that are sent by a first network entity (MSC1; SC) to the related Home Location Register (HLR) or to the related Visitor Location Register (VLR); by means of a second network entity (VLR-P; HLR-P) which subsequently interrogates the Home Location Register (HLR) or the Visitor Location Register (VLR) and returns retrieved routing information, in which the address of the routing destination (SC; MSC) has been replaced by the address of a third network entity (SC-P; MSC-P) that comprises the database.

11. A method according to claims 10, comprising the steps of returning the modified routing information to the first network entity (MSC1; SC), which sends the related Short Message (SM) to the third network entity (SC-P; MSC-P), which retrieves and executes the instructions that are provided for that Short Message (SM).

12. A method according to one of the claims 1 to 11, comprising the steps of marking a Short Message (SM) for which instructions were received and executed

13. Telecommunication system operating according to a method as defined in one of the claims 1-11.
